(19) Europäisches Patentamt

European Patent Office

Office européen des brevets

(11) **EP 1 047 081 B1**

(12) **EUROPEAN PATENT SPECIFICATION**

(45) Date of publication and mention
of the grant of the patent:
**23.06.2004 Bulletin 2004/26**

(51) Int Cl.⁷: **G21C 3/328**

(21) Application number: **00107162.0**

(22) Date of filing: **10.04.2000**

(54) **Nuclear fuel assembly**

Kernbrennstabbündel

Assemblage de combustible nucléaire

(84) Designated Contracting States:
**CH DE FI LI SE**

(30) Priority: **23.04.1999 JP 11609399**

(43) Date of publication of application:
**25.10.2000 Bulletin 2000/43**

(73) Proprietor: **Hitachi, Ltd.**
**Chiyoda-ku, Tokyo 101-8010 (JP)**

(72) Inventors:
  • **Chaki, Masao, Hitachi, Ltd., Intell. Prop. Group**
    **Chiyoda-ku, Tokyo 100-8220 (JP)**
  • **Nishida, Koji, Hitachi, Ltd., Intell. Prop. Group**
    **Chiyoda-ku, Tokyo 100-8220 (JP)**
  • **Kanazawa, Toru, Hitachi, Ltd., Intell. Prop. Group**
    **Chiyoda-ku, Tokyo 100-8220 (JP)**
  • **Orii, Akihito, Hitachi, Ltd., Intell. Prop. Group**
    **Chiyoda-ku, Tokyo 100-8220 (JP)**

(74) Representative: **Beetz & Partner Patentanwälte**
**Steinsdorfstrasse 10**
**80538 München (DE)**

(56) References cited:
**DE-A- 3 811 134**          **US-A- 5 202 085**
**US-A- 5 519 739**

• **PATENT ABSTRACTS OF JAPAN vol. 014, no.
529 (P-1133), 20 November 1990 (1990-11-20) &
JP 02 222863 A (TOSHIBA CORP), 5 September
1990 (1990-09-05)**
• **PATENT ABSTRACTS OF JAPAN vol. 015, no.
136 (P-1187), 4 April 1991 (1991-04-04) & JP 03
015796 A (TOSHIBA CORP), 24 January 1991
(1991-01-24)**
• **PATENT ABSTRACTS OF JAPAN vol. 014, no.
269 (P-1059), 11 June 1990 (1990-06-11) & JP 02
077687 A (HITACHI LTD), 16 March 1990
(1990-03-16)**
• **PATENT ABSTRACTS OF JAPAN vol. 016, no.
386 (P-1404), 18 August 1992 (1992-08-18) & JP
04 125493 A (HITACHI LTD), 24 April 1992
(1992-04-24)**
• **PATENT ABSTRACTS OF JAPAN vol. 014, no.
072 (P-1004), 9 February 1990 (1990-02-09) & JP
01 291196 A (NIPPON ATOM IND GROUP CO
LTD;OTHERS: 01), 22 November 1989
(1989-11-22)**
• **PATENT ABSTRACTS OF JAPAN vol. 017, no.
087 (P-1491), 22 February 1993 (1993-02-22) & JP
04 286990 A (HITACHI LTD), 12 October 1992
(1992-10-12)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to a nuclear fuel assembly of nuclear fuel usable in a nuclear reactor while being juxtaposed with another nuclear fuel assembly, and a nuclear reactor core including the nuclear fuel assembly.

A nuclear fuel assembly, according to the preamble of claim 1 is known from DE 3 811 34 A1. This document discloses a nuclear fuel assembly, comprising, nuclear fuel rods, and a rectangular channel box receiving in an inner space thereof the nuclear fuel rods.

It is the object of the present invention to provide a nuclear fuel assembly or nuclear reactor core in which an excessive boiling of coolant on locally limited one(s) of the fuel rods is restrained or prevented so that a number of the fuel rods reaching maximum power is kept large or the fuel rods reaching the maximum powers are distributed evenly over the whole of the nuclear fuel assembly or nuclear reactor core.

Patent Abstracts of Japan, Vol 017, No. 087 (P-1491), 22-02-1993 of JP-A-04 286 990, 12.10.1992 discloses a nuclear fuel assembly with a channel box including a partition member dividing an inner space of the channel box into a plurality of rooms, each of which receives therein the nuclear fuel rods.

According to the present invention, this object is achieved with a nuclear fuel assembly as claimed in claim 1. Dependent claims are directed on features of preferred embodiments of the invention.

Since the coolant flow path cross-sectional area surrounding first one of the nuclear fuel rods closest to the corner of the channel box or the bottom of the corner of the rectangular space to flow a coolant along the first one of the nuclear fuel rods is larger than the coolant flow path cross-sectional area surrounding the second one of the nuclear fuel rods relatively farther of more distant from the corner of the channel box or the bottom of the corner of the rectangular space in comparison with the first one of the nuclear fuel rods and facing to the inner surface of the rectangular channel box to flow the coolant along the second one of the nuclear fuel rods, a mass flow flux or rate of the coolant flowing along the first one of the nuclear fuel rods is kept larger than a mass flow flux or rate of the coolant flowing along the second one of the nuclear fuel rods. An output power energy generated by the first one of the nuclear fuel rods is larger than an output power energy generated by the second one of the nuclear fuel rods, because the first one of the nuclear fuel rods closest to the corner of the channel box or the corner of the rectangular space formed between the other rectangular channel boxes of nuclear fuel assemblies including the nuclear fuel rods with the moderator between the channel box or nuclear fuel assembly and each of the other channel boxes or nuclear fuel assemblies including the nuclear fuel rods is activated more strongly by thermal neutrons in the moderator in comparison with the second one of the nuclear fuel rods relatively more distant or farther from the corner of the channel box or the corner of the rectangular space in comparison with the first one of the nuclear fuel rods. A volume of the moderator effective to the first one of the nuclear fuel rods is larger than a volume of the moderator effective to the second one of the nuclear fuel rods, because a surface area of the first one of the nuclear fuel rods exposed to the thermal neutrons in the moderator is larger than a surface area of the second one of the nuclear fuel rods exposed to the thermal neutrons in the moderator. Therefore, a difference between the mass flow flux or rate of the coolant flowing along the first one of the nuclear fuel rods and the mass flow flux or rate of the coolant flowing along the second one of the nuclear fuel rods balances a difference between the output power energy generated by the first one of the nuclear fuel rods and the output power energy generated by the second one of the nuclear fuel rods in such a manner that the excessive boiling of coolant on locally limited one(s) of the fuel rods, that is, the first one of the nuclear fuel rods, is restrained or prevented, so that a number of the fuel rods reaching maximum powers without the excessive boiling of coolant thereon is kept large or the fuel rods reaching the maximum powers without the excessive boiling of coolant thereon are distributed evenly over the whole of the nuclear fuel assembly or nuclear reactor core.

When the rectangular channel box includes a partition member dividing the inner space into rooms each of which rooms receives therein the nuclear fuel rods, it is preferable that the coolant flow path cross-sectional area surrounding the first one of the nuclear fuel rods is larger than a coolant flow path cross-sectional area surrounding third one of the nuclear fuel rods facing to both of the partition member and the inner surface of the rectangular channel box without any nuclear fuel rod between the third one of the nuclear fuel rods and each of the partition member and the inner surface to flow the coolant along the third one of the nuclear fuel rods, because the output power energy generation from the third one of the nuclear fuel rods is suppressed in comparison with the output power energy generation from the first one of the nuclear fuel rods by a relatively smaller volume of the coolant which includes, for example, water and operates also as the moderator effective to the third one of the nuclear fuel rods in comparison with a volume of the coolant which operates as the moderator effective to the first one of the nuclear fuel rods and by a relatively smaller volume of the moderator effective to the third one of the nuclear fuel rods in comparison with a volume of the moderator effective to the first one of the nuclear fuel rods. The water effective for cooling the nuclear fuel rods, and effective for generating and storing the thermal neutrons may be included by each of the coolant and the moderator, that is, the coolant can generate and store effectively the thermal neutrons similarly to the moderator. The partition member whose capability as the moderator for generating and storing the thermal neutrons is significantly smaller than a capability of the coolant as the moderator for generating and storing the thermal neutrons is effective for suppressing the output power energy generation from the nuclear fuel rods facing to the partition wall. The partition member is effective for restraining a coolant flow in a direction perpendicular to a longitudinal direction of the nuclear fuel rods, particularly in a direction away from the first one of the nuclear fuel rods and increasing a rigidity and strength of the channel box. The coolant flow in the direction perpendicular to the longitudinal direction of the nuclear fuel rods decreases a critical output power of the nuclear fuel rods determined in accordance with whether or not a surface of the nuclear fuel rods is dried, because the coolant flow in the direction perpendicular to the longitudinal direction of the nuclear fuel rods is undesirable for preventing the surface of the nuclear fuel rods from being dried. The partition member is preferably made of, for example, zircaloy alloy, zirconium alloy, inconel alloy, stain-less steel or the like.

When the second one of the nuclear fuel rods is arranged between the first one of the nuclear fuel rods and the third one of the nuclear fuel rods so that the third one of the nuclear fuel rods is arranged between the second one of the nuclear fuel rods and the partition member and the second one of the nuclear fuel rods is prevented from facing to the partition member, it is preferable that the coolant flow path cross-sectional area surrounding the second one of the nuclear fuel rods is larger than the coolant flow path cross-sectional area surrounding the third one of the nuclear fuel rods, the output power energy generation from the third one of the nuclear fuel rods is suppressed in comparison with the output energy generation from the second one of the nuclear fuel rods by the partition member. Therefore, an excessive volume of the coolant is not arranged over the third one of the nuclear fuel rods, while a sufficient volume of the coolant is arranged over the second one of the nuclear fuel rods.

When fourth one of the nuclear fuel rods facing to the partition member is arranged more distant from the inner surface in comparison with the third one of the nuclear fuel rods so that the third one of the nuclear fuel rods is arranged between the fourth one of the nuclear fuel rods and the inner surface to prevent the fourth one of the nuclear fuel rods from facing to the inner surface, it is preferable that the coolant flow path cross-sectional area surrounding the third one of the nuclear fuel rods is larger than a coolant flow path cross-sectional area surrounding the fourth one of the nuclear fuel rods to flow the coolant along the fourth one of the nuclear fuel rods, because the third one of the nuclear fuel rods is more strongly activated in comparison with the fourth one of the nuclear fuel rods by the moderator between the channel box including the third one and fourth one of the nuclear fuel rods and another channel box adjacent to the channel box including the third one and fourth one of the nuclear fuel rods.

When the coolant flow path cross-sectional area surrounding the second one of the nuclear fuel rods is larger than the coolant flow path cross-sectional area surrounding the fourth one of the nuclear fuel rods, a transverse coolant flow from the second one of the nuclear fuel rods toward the fourth one of the nuclear fuel rods by the excessive boiling of the second one of the nuclear fuel rods is restrained.

When fifth one of the nuclear fuel rods is prevented from facing to both of the partition member and the inner surface, it is preferable that a coolant flow path cross-sectional area surrounding the fifth one of the nuclear fuel rods to flow the coolant along the fifth one of the nuclear fuel rods is larger than the coolant flow path cross-sectional area surrounding the fourth one of the nuclear fuel rods to flow the coolant along the fourth one of the nuclear fuel rods, because the fifth one of the nuclear fuel rods faces directly to four nuclear fuel rods, and the fourth one of the nuclear fuel rods faces directly to three nuclear fuel rods and the partition member so that a density or number of the thermal neutrons supplied from the four nuclear fuel rods facing to the fifth one of the nuclear fuel rods and stored by the coolant surrounding the fifth one of the nuclear fuel rods is larger than a density or number of the thermal neutrons supplied from the three nuclear fuel rods facing to the fourth one of the nuclear fuel rods and stored by the coolant surrounding the fifth one of the nuclear fuel rods, and because the output energy generation from the fourth one of the nuclear fuel rods is suppressed in comparison with the output energy generation from the fifth one of the nuclear fuel rods by the partition member.

It is effective for preventing the excessive boiling of the coolant surrounding the third one and fourth one of the nuclear fuel rods facing to the partition member that the partition member includes a metallic material for a high absorption of neutrons not effective as neutron moderator.

It is preferable for adjusting correctly the coolant flow path cross-sectional area surrounding the first one and third one of the fuel rods that a distance between the first one of the fuel rods and the inner surface facing to the first one of the fuel rods is larger than a distance between the third one of the fuel rods and the partition member facing to the third one of the fuel rods. It is preferable for adjusting correctly the coolant flow path cross-sectional area surrounding the second one and third one of the fuel rods that a distance between the second one of the fuel rods and the inner surface facing to the second one of the fuel rods is larger than a distance between the third one of the fuel rods and the partition member facing to the third one of the fuel rods.

It is preferable that the distance between the third one of the fuel rods and the partition member facing to the third one of the fuel rods is not less than 1 mm. When the nuclear fuel assembly includes a series of rows of the nuclear fuel rods, a number of the nuclear fuel rods in each of the rows is 10, and a number of the rows in the series is 10, it is preferable that the distance between the first one of the fuel rods and the inner surface facing to the first one of the fuel rods is more than 1.24 mm. When the number of the nuclear fuel rods in each of the rows is 12, and the number of the rows in the series is 12, it is preferable that the distance between the first one of the fuel rods and the inner surface facing to the first one of the fuel rods is more than 1.3 mm. When the number of the nuclear fuel rods in each of the rows is 14, and the number of the rows in the series is 14, it is preferable that the distance between the first one of the fuel rods and the inner surface facing to the first one of the fuel rods is more than 1.36 mm. When the number of the nuclear fuel rods in each of the rows is 16, and the number of the rows in the series is 16, it is preferable that the distance between the first one of the fuel rods and the inner surface facing to the first one of the fuel rods is more than 1.42 mm. When the number of the nuclear fuel rods in each of the rows is 18, and the number of the rows in the series is 18, it is preferable that the distance between the first one of the fuel rods and the inner surface facing to the first one of the fuel rods is more than 1.48 mm.

BRIEF DESCRIPTION OF THE DRAWINGS

Fig. 1 is a cross-sectional view showing a first embodiment of fuel rod assembly of the present invention.

Fig. 2 is a diagram showing a relation between a relative value between fuel rod's critical output power and a distance between the fuel rods.

Fig. 3 is a local view showing a coolant flow path formed between the nuclear fuel rods.

Fig. 4 is a cross sectional view taken along an imaginary plane extending perpendicular to a longitudinal direction of the nuclear fuel rods at one of spacer bands which are spaced apart from each other in the longitudinal direction at an interval of, for example, 50 cm, and a width of 3 cm, for showing a positional relationship between the nuclear fuel rods and a positional relationship between the nuclear fuel rod and a partition member.

Fig. 5 is a cross-sectional view showing a second embodiment of fuel rod assembly of the present invention.

Fig. 6 is a cross-sectional view showing a third embodiment of fuel rod assembly of the present invention.

Fig. 7 is a cross-sectional view showing a fourth embodiment of fuel rod assembly of the present invention.

Fig. 8 is a cross-sectional view showing a fifth embodiment of fuel rod assembly of the present invention.

Fig. 9 is a schematic view showing an arrangement of the assemblies of nuclear fuel rods or channel boxes in a nuclear reactor core.

Fig. 10a is a schematic cross sectional view showing a coolant flow path cross-sectional area surrounding the claimed first one of fuel rods, wherein the coolant flow path cross-sectional area of the claimed first one of fuel rods is defined by an inner surface of the channel box and two imaginary center lines between the first one of fuel rods and other two fuel rods facing to the first one of fuel rods.

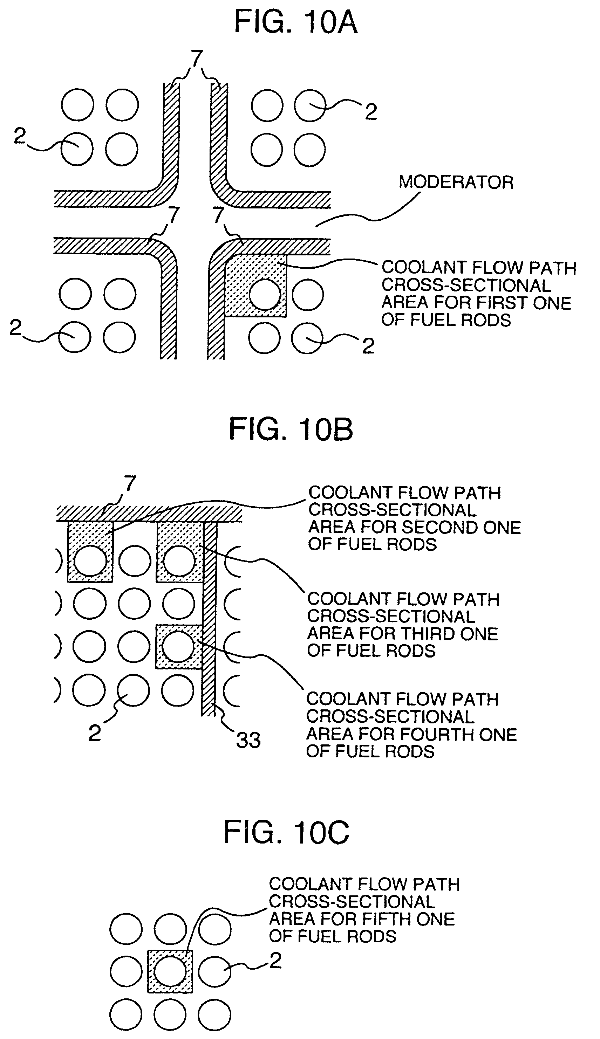

Fig. 10b is a schematic cross sectional view showing a coolant flow path cross-sectional area surrounding the claimed second one of fuel rods, a coolant flow path cross-sectional area surrounding the claimed third one of fuel rods, and a coolant flow path cross-sectional area surrounding the claimed fourth one of fuel rods, wherein the coolant flow path cross-sectional area of the claimed second one of fuel rods is defined by the inner surface of the channel box and three imaginary center lines between the second one of fuel rods and other three fuel rods facing to the second one of fuel rods, the coolant flow path cross-sectional area of the claimed third one of fuel rods is defined by the inner surface of the channel box, the partition member and two imaginary center lines between the third one of fuel rods and other two fuel rods facing to the third one of fuel rods, and the coolant flow path cross-sectional area of the claimed fourth one of fuel rods is defined by the partition member and three imaginary center lines between the fourth one of fuel rods and other three fuel rods facing to the fourth one of fuel rods.

Fig. 10c is a schematic cross sectional view showing a coolant flow path cross-sectional area surrounding the claimed fifth one of fuel rods non-facing to both an inner surface of the channel box and the partition member, wherein the coolant flow path cross-sectional area of the claimed fifth one of fuel rods is defined by four imaginary center lines between the fifth one of fuel rods and other four fuel rods facing to the fifth one of fuel rods.

DETAILED DESCRIPTION OF PREFERRED EMBODIMENTS

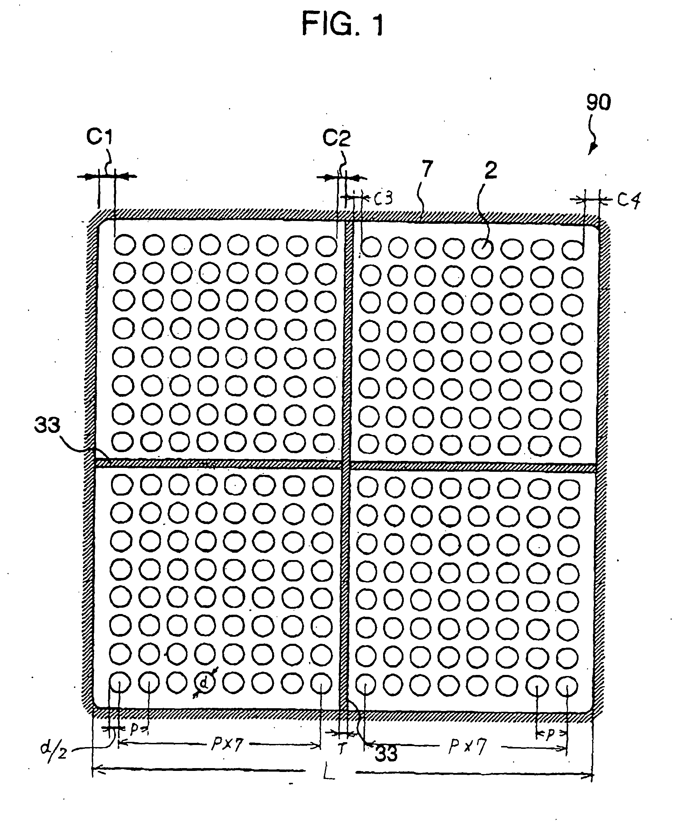

Fig. 1 shows a nuclear fuel assembly with a high power density and high burnup (increasing discharged exposure). The nuclear fuel assembly 90 includes nuclear fuel rods 2 and a channel box 7 receiving in an inner space thereof the fuel rods 2. A width of the inner space (inner width of the channel box 7) of this embodiment is about 201 mm, which is 1.5 times of a normal width of the inner space of a normal channel box. The channel box 7 receives in the inner space thereof a series of rows of the nuclear fuel rods 2 with a number of the nuclear fuel rods 2 in each of the rows is 16 and a number of the rows in the series is 16. An outer diameter of the nuclear fuel rods 2 is about 10 mm, and a thickness of a peripheral wall of the channel box 7 is about 2.5 mm. A main flow component of a coolant flows substantially parallel to a longitudinal direction of the fuel rods 2 or the nuclear fuel assembly 90.

In a prior art nuclear fuel assembly, when an outer diameter of the fuel rods is 11.2 mm, a width of the inner space of a prior art channel box is 134 mm for receiving a series of rows of the nuclear fuel rods arranged on a square lattice of 9-rows by 9-columns with a number of the nuclear fuel rods in each of the rows is 9 and a number of the rows in the series is 9, a thickness of a peripheral wall of the prior art channel box is about 2.5 mm and a distance between the channel box and another channel box adjacent to the channel box is 15 mm, a total outer peripheral length of the fuel rods is (11.2 * $\pi$ * 9 * 9 = 2850 mm). A cross sectional area for receiving the prior art nuclear fuel assembly with a space between the channel box and the another channel box adjacent to the channel box is [(134 + 2.5 * 2 + 15)$^2$ = 23716 mm$^2$]. Therefore, (an outer peripheral length of fuel rods for thermal transmission from the fuel rods) per (the cross sectional area of 100 mm$^2$ for receiving the prior art nuclear fuel assembly) is (2850 * 100 / 23716 = 12.0 mm).

In the embodiment of Fig. 1, a total outer peripheral length of the fuel rods is (10 * $\pi$ * 16 * 16 = 8042 mm), and a cross sectional area for receiving the nuclear fuel assembly of the embodiment with a space between the channel box and the another channel box adjacent to the channel box is [(201 + 2.5 * 2 + 15)$^2$ = 48841 mm$^2$]. Therefore, (an outer peripheral length of fuel rods for thermal transmission from the fuel rods) per (the cross sectional area of 100 mm$^2$ for receiving the nuclear fuel assembly) is (8042 * 100 / 48841 = 16.5 mm). Therefore, (an outer peripheral length of fuel rods for thermal transmission from the fuel rods) per (a unit volume of the cross sectional area for receiving the nuclear fuel assembly) according to the present invention is improved by about 40 %, while the width of the inner space of the embodiment channel box is increased by 1.5 times in comparison with the prior art channel box, and the outer diameter of the embodiment fuel rods is decreased in comparison with the prior art fuel rods. Therefore, if a thermal flux on surfaces of the embodiment fuel rods is substantially equal to that of the prior art fuel rods, an output power per a unit volume of a nuclear reactor core, that is, an operating efficiency of the nuclear reactor is improved by the present invention in comparison with the prior art.

In the prior art nuclear fuel assembly, when a distance between the fuel rods and the channel box is 3 mm, a uniform pitch between the fuel rods adjacent to each other is [(134 - 3 * 2 - 11.2 ) / (9 - 1) = 14.6 mm]. Therefore, a distance between the fuel rods adjacent to each other is (14.6 - 11.2 = 3.4 mm).

In the embodiment nuclear fuel assembly, a uniform pitch between the fuel rods adjacent to each other is [(201 - 3 * 2 - 10 ) / (16 - 1) = 12.3 mm]. Therefore, a distance between the fuel rods adjacent to each other is (12.3 - 10 = 2.3 mm). If a partition member 33 may be used to divide the inner space of the channel box into four rooms so that the channel box 7 of 2.5 mm thickness is reinforced and a coolant flow in a transverse or horizontal direction decreasing a thermal margin of the nuclear fuel assembly is restrained when a size of the nuclear fuel assembly is enlarged by 1.5 times, a thickness of the partition member 33 may be 2.5 mm, and a distance between the partition member 33 and the fuel rods 2 facing to the partition member (partition plate) 33 may be 3 mm, a uniform pitch between the fuel rods adjacent to each other is [(201 - 3 * 4 - 2.5 - 10 * 2) / (16 - 2) = 11.9 mm]. Therefore, a distance between the fuel rods adjacent to each other is (11.9 - 10 = 1.9 mm).

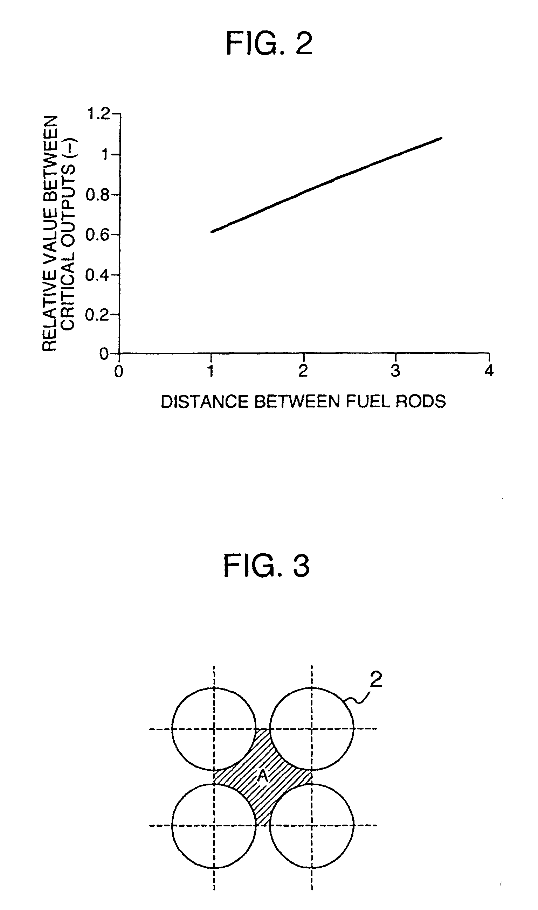

By decreasing the distance between the fuel rods adjacent to each other, a coolant flow resistance of a coolant path A (as shown in Fig. 3) formed among the fuel rods is increased so that the critical output power of the fuel rods is decreased. In Fig. 2, a relationship between the critical output power of the nuclear fuel assembly and the uniform distance between the fuel rods in the nuclear fuel assembly is shown as a case of that the output powers of the respective fuel rods 2 are substantially uniform in the nuclear fuel assembly, and a mass flux of coolant ( = a mass flow rate / unit cross-sectional area of the coolant flow path kg/(m$^2$ * s)) is substantially uniform in the fuel rods, and the diameter of the fuel rods is 10 mm. The cross-sectional area of the coolant flow path is not changed by an arrangement of the fuel rods in the assembly thereof when a number of the fuel rods is not changed in the assembly thereof. As shown in Fig. 2, the larger the distance between the fuel rods in the assembly is, the larger the critical output power of the nuclear fuel assembly is. Therefore, if a size of the channel box 7 is enlarged and the fuel rods of a relatively small diameter are received in the channel box 7 so that a surface area of the fuel rods for thermal transmission between the fuel rods and the coolant is increased, the distance between the fuel rods in the assembly of fuel rod may be small.

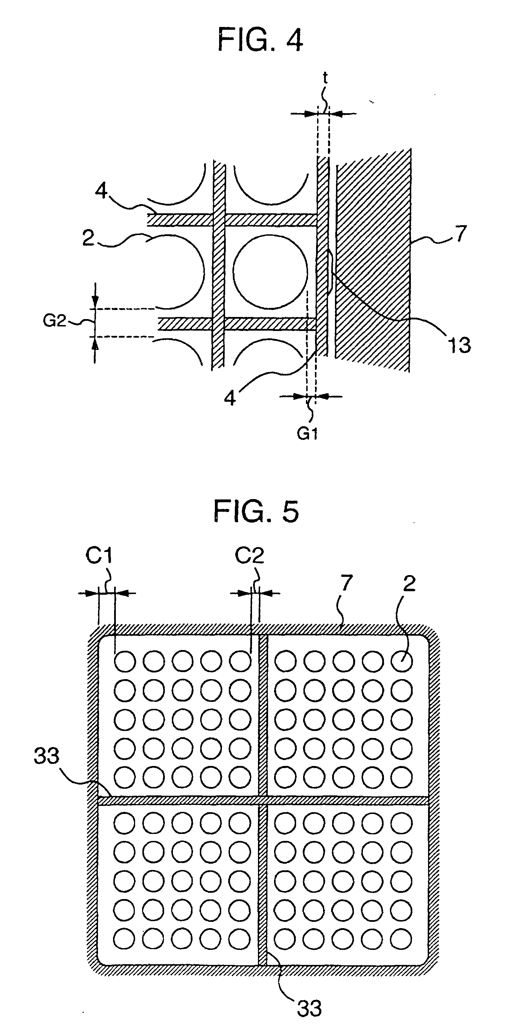

When a traverse or horizontal coolant flow in the assembly 90 of the fuel rods 2 is disregarded and it is assumed that the mass flux of coolant is constant, the mass flow rate (mass flux of coolant * cross-sectional area of the coolant flow path) of the coolant path A (as shown in Fig. 3) formed among the fuel rods is decreased in accordance with a decrease of the cross-sectional area of the coolant path A. Therefore, a thermal energy supplied to the coolant in the coolant path A / unit weight of the coolant is increased and a thermal energy transmission from the fuel rods to the coolant is decreased so that the critical output power is decreased as shown in Fig. 5, when the total output power of the fuel rods surrounding the coolant path A is constant.

When a distance between the fuel rods 2 in a first assembly size is 3.4 mm and a distance between the fuel rods 2 in a second assembly size of 1.5 times of the first assembly size is 1.9 mm, the critical output power of the assembly of the second assembly size is decreased by 25 % relative to the critical output power of the assembly of the first assembly size. Since a peripheral length of the fuel rods for thermal transmission of the assembly of the second assembly size is increased by 40 % in comparison with the assembly of the first assembly size although a diameter of the fuel rods 2 in the assembly of the first assembly size is different from that of the fuel rods 2 in the assembly of the second assembly size, the critical output power of the assembly of the first assembly size is increased by 15 % in comparison with the assembly of the first assembly size. It is preferable for increasing the critical output power that the distance between the fuel rods 2 is increased as large as possible as shown in Fig. 2.

In Fig. 1 showing a first embodiment of the present invention, a distance C2 between the partition member 33 and the fuel rod 2 facing to the partition wall 33 is smaller than a distance C1 between an inner surface of the channel box 7 and the fuel rod 2 facing to the inner surface of the channel box 7, and a distance between the fuel rods 2 both not-facing to both of the inner surface of the channel box 7 and the partition member 33 and facing to each other is smaller that the distance C1 between the inner surface of the channel box 7 and the fuel rod 2 facing to the inner surface of the channel box 7.

It is effective for increasing the distance between the fuel rods 2 that the distance C2 between the partition member 33 and the fuel rod 2 facing to the partition wall 33 and the distance C1 between an inner surface of the channel box 7 and the fuel rod 2 facing to the inner surface of the channel box 7 are decreased. On the other hand, by decreasing the distance C1, a thermal margin of the fuel rod 2 against the excessive coolant boiling is particularly decreased because the output power of the fuel rods facing to the inner surface of the channel box 7 is particularly large in comparison with the fuel rods not-facing to the inner surface of the channel box 7. The output power of the fuel rods facing to the inner surface of the channel box 7 in two direction perpendicular to each other as the claimed first one of the fuel rods tends to be relatively large in the nuclear fuel assembly. Therefore, the distance C1 between the fuel rod facing to the inner surface of the channel box 7 in the two direction perpendicular to each other and the inner surface of the channel box 7 particularly should not be decreased.

The output power of the fuel rod 2 facing to the partition member 33 and the inner surface of the channel box 7 is smaller than that of the fuel rod 2 facing to the inner surface of the channel box 7 and not facing to the partition member 33 and than that of the fuel rod facing to the inner surface of the channel box 7 in the two directions perpendicular to each other, because a characteristic of the partition member as the moderator is significantly smaller than that of the coolant such as water. Therefore, the distance C2 between the partition member 33 and the fuel rod 2 facing to the partition wall 33 may be somewhat decreased in comparison with the fuel rod 2 facing to the inner surface of the channel box 7 and not facing to the partition member 33 and the fuel rod facing to the inner surface of the channel box 7 in the two direction perpendicular to each other.

As shown in Fig. 4, the distances C1 and C2 may be adjusted by changing a height of tabs 13 on a spacer band 4. The tabs 13 may be welded to the spacer band 4, and a minimum height of the tab 13 is 0.1 mm. In the present invention, by decreasing the distance C2, the distance between the fuel rods 2 is increased. A minimum value of the distance C2 is limited by the spacer band 4. A thickness of the spacer band 4 is at least 0.3 mm. A distance G1 between the fuel rod 2 and the spacer band 4 is calculated from the distance G2 between the fuel rods 2 and the thickness of the spacer band 4 as follows.

$$G1 = (G2 - t) / 2$$

If the distance G2 between the fuel rods 2 is 1.9 mm, the minimum distance C2 between the fuel rod 2 and the partition member 33 is 1.2 mm. The distance between the fuel rods 2 may be further decreased and the minimum distance between the fuel rod 2 and the partition member 33 may be decreased according to the decrease of the distance between the fuel rods 2. An actually usable value of the minimum distance between the fuel rod 2 and the partition member 33 is 1 mm.

When the distance between the partition member 33 and the fuel rod 2 facing thereto is 1.2 mm, the distance between the fuel rods 2 is 2.2 mm. When the distance between the partition member 33 and the fuel rod 2 facing thereto is 3 mm equal to the distance between the inner surface of the channel box 7 and the fuel rod 2 facing thereto, the distance between the fuel rods 2 is 1.9 mm. Therefore, by decreasing the distance between the partition member 33 and the fuel rod 2 facing thereto, the distance between the fuel rods 2 is increased by 0.3 mm. As obtained from Fig. 2, the critical output power is increased by about 1.7 % in accordance with an increase of 0.1 mm in the distance between the fuel rods 2. Therefore, the critical output power is increased by about 5 % in accordance with the increase of 0.3 mm in the distance between the fuel rods 2. As stated above, decreasing the distance between the partition member 33 and the fuel rod 2 facing thereto so that the distance between the fuel rods 2 is increased is effective for increasing the critical output power.

It is necessary for improving the critical output power by 1 % that the distance between the fuel rods 2 is increased by about 0.06 mm. In the assembly 90 including the series of rows of the nuclear fuel rods 2 arranged on a square lattice of 16-rows by 16-columns with the number of the nuclear fuel rods 2 in each of the rows is 16 and the number of the rows in the series is 16 and including the partition member 33 as shown in Fig. 1, a decrease of 0.42 in the distance C2 between the partition member and the fuel rod facing thereto increases the distance between the fuel rods 2 by about 0.06 mm.

In a second embodiment of the present invention as shown in Fig. 5, the nuclear fuel rod assembly 90 includes the series of rows of the nuclear fuel rods 2 arranged on a square lattice of 10-rows by 10-columns with the number of the nuclear fuel rods 2 in each of the rows is 10 and the number of the rows in the series is 10 and includes the partition member 33. By decreasing the distance between the partition member and the fuel rod facing thereto so that the distance between the fuel rods facing to each other is increased, the critical output power of the nuclear fuel rod assembly 90 is increased similarly to the first embodiment. A decrease of 0.24 mm in the distance C2 between the partition member and the fuel rod facing thereto improves the critical output power by at least 1 %.

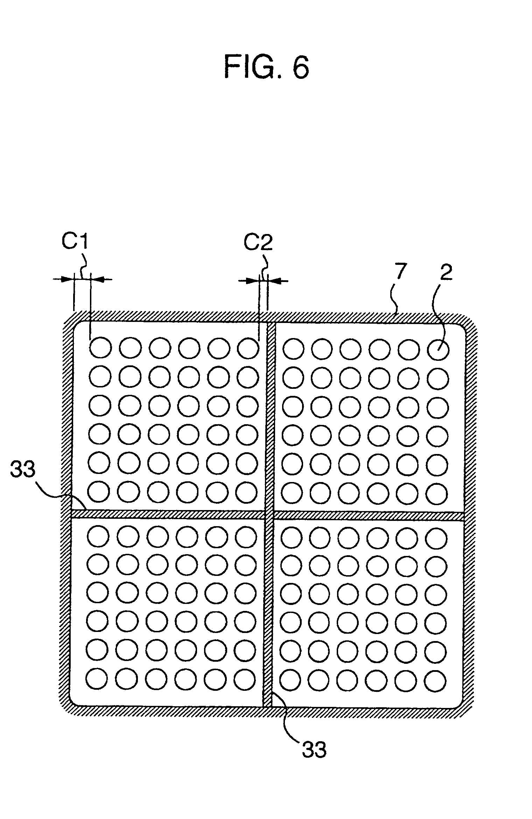

In a third embodiment of the present invention as shown in Fig. 6, the nuclear fuel rod assembly 90 includes the series of rows of the nuclear fuel rods 2 arranged on a square lattice of 12-rows by 12-columns with the number of the nuclear fuel rods 2 in each of the rows is 12 and the number of the rows in the series is 12 and includes the partition member 33. By decreasing the distance between the partition member and the fuel rod facing thereto so that the distance between the fuel rods facing to each other is increased, the critical output power of the nuclear fuel rod assembly 90 is increased similarly to the first embodiment. A decrease of 0.3 mm in the distance C2 between the partition member and the fuel rod facing thereto improves the critical output power by at least 1 %.

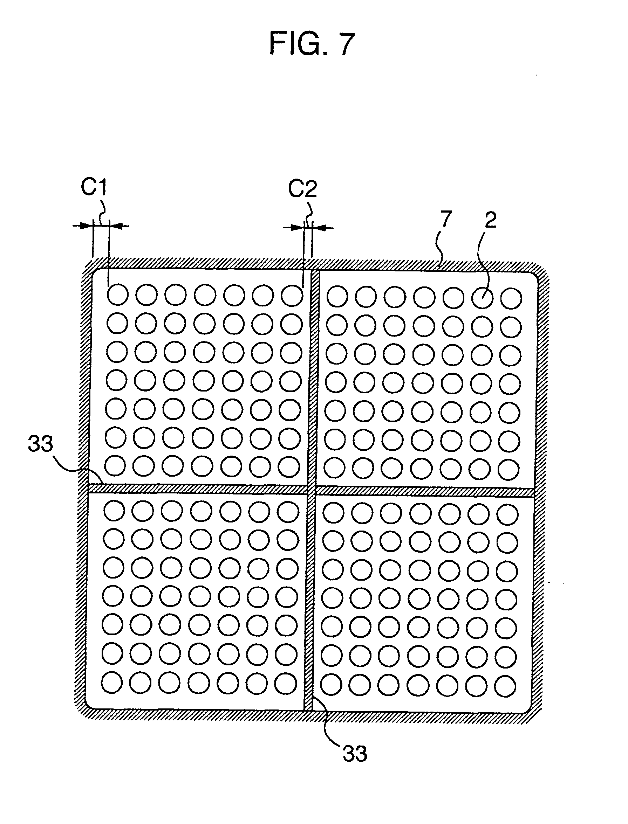

In a fourth embodiment of the present invention as shown in Fig. 7, the nuclear fuel rod assembly 90 includes the series of rows of the nuclear fuel rods 2 arranged on a square lattice of 14-rows by 14-columns with the number of the nuclear fuel rods 2 in each of the rows is 14 and the number of the rows in the series is 14 and includes the partition member 33. By decreasing the distance between the partition member and the fuel rod facing thereto so that the distance between the fuel rods facing to each other is increased, the critical output power of the nuclear fuel rod assembly 90 is increased similarly to the first embodiment. A decrease of 0.36 mm in the distance C2 between the partition member and the fuel rod facing thereto improves the critical output power by at least 1 %.

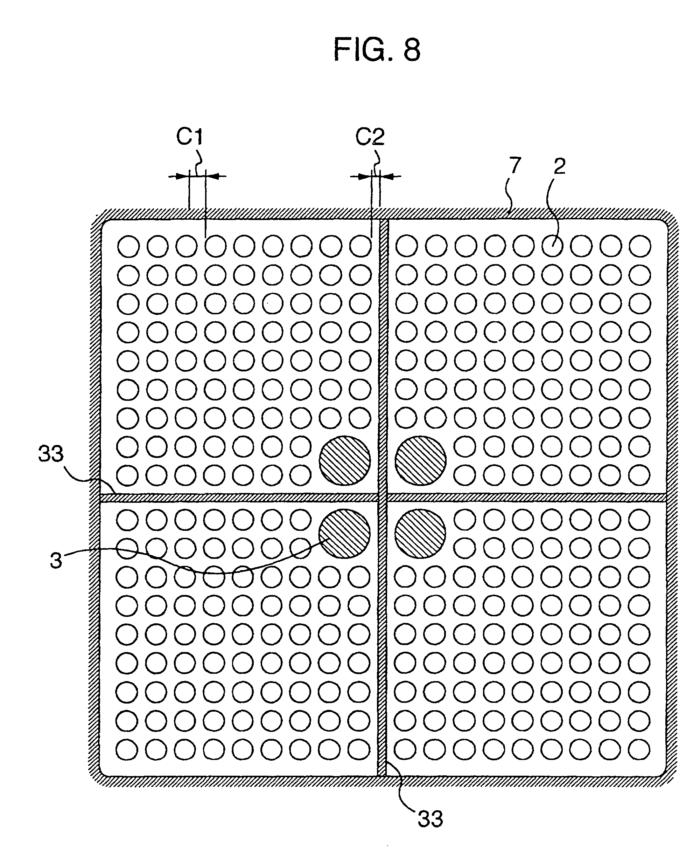

In a fifth embodiment of the present invention as shown in Fig. 8, the nuclear fuel rod assembly 90 includes the series of rows of the nuclear fuel rods 2 arranged on a square lattice of 18-rows by 18-columns with the number of the nuclear fuel rods 2 in each of the rows is 18 and the number of the rows in the series is 18 and includes the partition member 33. By decreasing the distance between the partition member and the fuel rod facing thereto so that the distance between the fuel rods facing to each other is increased, the critical output power of the nuclear fuel rod assembly 90 is increased similarly to the first embodiment. A decrease of 0.48 mm in the distance C2 between the partition member and the fuel rod facing thereto improves the critical output power by at least 1 %.

The partition member 33 may be plate-shaped, and may include a coolant path therein. As in the fifth embodiment, at least one water rod 3 operating as the moderator may be included by the assembly 90 of the fuel rods 2. The assembly 90 of the fuel rods 2 may include at least one relatively short fuel rod whose length is smaller than the other or normal fuel rods 2.

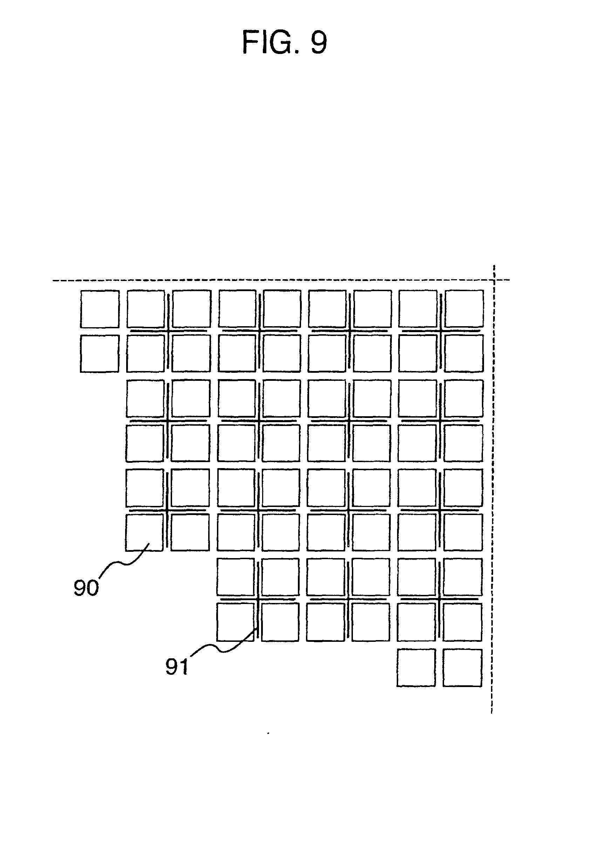

In a nuclear reactor core as shown in Fig. 9, control rods 91 for controlling thermal neutron flux between the assemblies 90 of the fuel rods 2 are arranged between the assemblies 90 of the fuel rods 2.

## Claims

1. A nuclear fuel assembly (90), comprising,

    nuclear fuel rods (2), and
    a rectangular channel box (7) receiving in an inner space thereof the nuclear fuel rods (2), wherein
    a coolant flow path cross-sectional area surrounding first one of the nuclear fuel rods closest to a corner of the rectangular channel box to flow a coolant along the first one of the nuclear fuel rods is larger than a coolant flow path cross-sectional area surrounding second one of the nuclear fuel rods relatively more distant from the corner of the rectangular channel box in comparison with the first one of the nuclear fuel rods and facing to an inner surface of the rectangular channel box to flow the coolant along the second one of the nuclear fuel rods, **characterized in that** the rectangular channel box (7) includes a partition member (33) dividing the inner space into rooms each of which rooms receives therein the nuclear fuel rods (2), and the coolant flow path cross-sectional area surrounding the first one of the nuclear fuel rods is larger than a coolant flow path cross-sectional area surrounding third one of the nuclear fuel rods facing to the partition member (33) and the inner surface of the rectangular channel box (7) to flow the coolant along the third one of the nuclear fuel rods.

2. A nuclear fuel assembly (90) according to claim 1, **characterized in that** the second one of the nuclear fuel rods is arranged between the first one of the nuclear fuel rods and the third one of the nuclear fuel rods so that the second one of the nuclear fuel rods is prevented from facing to the partition member, and the coolant flow path cross-sectional area surrounding the second one of the nuclear fuel rods is larger than the coolant flow path cross-sectional area surrounding the third one of the nuclear fuel rods.

3. A nuclear fuel assembly (90) according to claim 1, **characterized in that** the second one of the nuclear fuel rods is arranged between the first one of the nuclear fuel rods and the third one of the nuclear fuel rods so that the second one of the nuclear fuel rods is prevented from facing to the partition member,

fourth one of the nuclear fuel rods facing to the partition member (33) is arranged more distant from the inner surface in comparison with the third one of the nuclear fuel rods so that the fourth one of the nuclear fuel rods is prevented from facing to the inner surface, and the coolant flow path cross-sectional area surrounding the second one of the nuclear fuel rods is larger than a coolant flow path cross-sectional area surrounding the fourth one of the nuclear fuel rods to flow the coolant along the fourth one of the nuclear fuel rods.

4. A nuclear fuel assembly (90) according to claim 1, **characterized in that** fourth one of the nuclear fuel rods facing to the partition member (33) is arranged more distant from the inner surface in comparison with the third one of the nuclear fuel rods so that the fourth one of the nuclear fuel rods is prevented from facing to the inner surface, and the coolant flow path cross-sectional area surrounding the third one of the nuclear fuel rods is larger than a coolant flow path cross-sectional area surrounding the fourth one of the nuclear fuel rods to flow the coolant along the fourth one of the nuclear fuel rods.

5. A nuclear fuel assembly (90) according to claim 1, **characterized in that** fourth one of the nuclear fuel rods facing to the partition member (33) is arranged more distant from the inner surface in comparison with the third one of the nuclear fuel rods so that the fourth one of the nuclear fuel rods is prevented from facing to the inner surf ace, fifth one of the nuclear fuel rods is prevented from facing to both of the partition member and the inner surface, and a coolant flow path cross-sectional area surrounding the fifth one of the nuclear fuel rods to flow the coolant along the fifth one of the nuclear fuel rods is larger than a coolant flow path cross-sectional area surrounding the fourth one of the nuclear fuel rods to flow the coolant along the fourth one of the nuclear fuel rods.

6. A nuclear fuel assembly (90) according to claim 1, **characterized in that** the partition member (33) includes a metallic material for absorption of neutrons.

7. A nuclear fuel assembly (90) according to claim 1, **characterized in that** a distance between the first one of the fuel rods and the inner surface facing to the first one of the fuel rods is larger than a distance between the third one of the fuel rods and the partition member facing to the third one of the fuel rods.

8. A nuclear fuel assembly (90) according to claim 1, **characterized in that** a distance between the second one of the fuel rods and the inner surface facing to the second one of the fuel rods is larger than a distance between the third one of the fuel rods and the partition member (33) facing to the third one of the fuel rods.

9. A nuclear-fuel assembly (90) according to claim 7, **characterized in that** the distance between the third one of the fuel rods and the partition member (33) facing to the third one of the fuel rods is not less than 1 mm.

10. A nuclear fuel assembly (90) according to claim 9, **characterized in that** the nuclear fuel assembly includes a series of rows of the nuclear fuel rods arranged on a square lattice of 10-rows by 10-columns in the rectangular channel box (7), and the distance between the first one of the fuel rods and the inner surface facing to the first one of the fuel rods is more than 1.24 mm.

11. A nuclear fuel assembly (90) according to claim 9, **characterized in that** the nuclear fuel assembly includes a series of rows of the nuclear fuel rods arranged on a square lattice of 12-rows by 12-columns in the rectangular channel box (7), and the distance between the first one of the fuel rods and the inner surface facing to the first one of the fuel rods is more than 1.3 mm.

12. A nuclear fuel assembly (90) according to claim 9, **characterized in that** the nuclear fuel assembly includes a series of rows of the nuclear fuel rods arranged on a square lattice of 14-rows by 14-columns in the rectangular channel box (7), and the distance between the first one of the fuel rods and the inner surface facing to the first one of the fuel rods is more than 1.36 mm.

13. A nuclear fuel assembly (90) according to claim 9, **characterized in that** the nuclear fuel assembly includes a series of rows of the nuclear fuel rods arranged on a square lattice of 16-rows by 16-columns in the rectangular channel box (7), and the distance between the first one of the fuel rods and the inner surface facing to the first one of the fuel rods is more than 1.42 mm.

14. A nuclear fuel assembly (90) according to claim 9, **characterized in that** the nuclear fuel assembly includes a series of rows of the nuclear fuel rods arranged on a square lattice of 18-rows by 18-columns in the rectangular channel box (7), and the distance between the first one of the fuel rods and the inner surface facing to the first one of the fuel rods is more than 1.48 mm.

**Patentansprüche**

1. Kernbrennelementkassette (90) mit:

    Kernbrennstäben (2) und
    einem rechteckigen Wasserkasten (7), der in seinem Innenraum die Kernbrennstäbe (2) aufnimmt,

    wobei eine Kühlmittelpfad-Querschnittsfläche, die erste Kernbrennstäbe umgibt, die am nächsten zu einer Ecke des rechteckigen Wasserkastens angeordnet ist, damit ein Kühlmittel entlang der ersten Kernbrennstäbe strömen kann, größer ist als die Kühlmittelströmungsweg-Querschnittsfläche, die zweite Kernbrennstäbe umgibt, die weiter von der Ecke des rechtwinkligen Wasserkastens entfernt sind als die ersten Kernbrennstäbe und die einer inneren Oberfläche des rechtwinkligen Wasserkastens gegenüberliegen, wobei der Kühlmittelfluss entlang der zweiten Kernbrennstäbe fließt, **dadurch gekennzeichnet, dass** der rechtwinklige Wasserkasten (7) eine Unterteilung (33) aufweist, die den inneren Raum in Räume unterteilt, die jeweils die Kernbrennstäbe (2) aufnehmen und wobei die Querschnittsfläche des Kühlmittelfließpfads, welcher die ersten Kernbrennstäbe umgibt, größer ist als die Querschnittsfläche des Kühlmittelflusspfades, der dritte Kernbrennstäbe umfasst, die gegenüber der Abtrennung (33) und der inneren Oberfläche des rechteckigen Wasserkastens (7) liegen, um Kühlmittel entlang der dritten Kembrennstäbe fließen zu lassen.

2. Kernbrennelementkassette (90) nach Anspruch 1, **dadurch gekennzeichnet, dass** die zweiten Kernbrennstäbe zwischen den ersten Kernbrennstäben und den dritten Kernbrennstäben angeordnet sind, so dass die zweiten Kernbrennstäbe nicht gegenüber der Unterteilung angeordnet sind, und wobei die Kühlmittelflusswegs-Querschnittsfläche, die die zweiten Kernbrennstäbe umgibt, größer ist als die Kühlmittelflusswegs-Querschnittsfläche, die die dritten Kernbrennstäbe umgibt.

3. Kernbrennelementkassette (90) nach Anspruch 1, **dadurch gekennzeichnet, dass** die zweiten Kernbrennstäbe zwischen den ersten Kernbrennstäben und den dritten Kernbrennstäben angeordnet sind, so dass die zweiten Kernbrennstäbe nicht gegenüber der Unterteilung liegen, vierte Kernbrennstäbe gegenüber der Unterteilung (33) liegen und weiter entfernt von der inneren Oberfläche angeordnet sind als die dritten Kernbrennstäbe, so dass die vierten Kernbrennstäbe nicht gegenüber der inneren Oberfläche liegen und die Kühlmittelflusswegs-Querschnittsfläche, welche die zweiten Kernbrennstäbe umgibt, größer ist als die Kühlmittelflusswegs-Querschnittsfläche, die die vierten Kernbrennstäbe umgibt, um Kühlmittel entlang der vierten Kernbrennstäbe fließen zu lassen.

4. Kernbrennelementkassette (90) nach Anspruch 1, **dadurch gekennzeichnet, dass** die vierten Kernbrennstäbe, welche gegenüber der Abtrennung (33) angeordnet sind, entfernter von der inneren Oberfläche angeordnet sind als die dritten Kernbrennstäbe, so dass die vierten Kernbrennstäbe daran gehindert sind, gegenüber der inneren Oberfläche zu liegen und die Kühlmittelflusswegs-Querschnittsfläche, welche die dritten Kernbrennstäbe umgibt, größer ist als die Kühlmittelflusswegs-Querschnittsfläche, welche die vierten Kernbrennstäbe umgibt, um Kühlmittel entlang der vierten Kernbrennstäbe fließen zu lassen.

5. Kernbrennelementkassette (90) nach Anspruch 1, **dadurch gekennzeichnet, dass** die vierten Kernbrennstäbe, die gegenüber der Abtrennung (33) liegen, entfernter von der inneren Oberfläche angeordnet sind als die dritten Kernbrennstäbe, so dass die vierten Kernbrennstäbe daran gehindert sind, gegenüber der inneren Oberfläche zu liegen, und fünfte Kernbrennstäbe daran gehindert sind, gegenüber der Unterteilung und der inneren Oberfläche zu liegen, wobei die Kühlmittelflusswegs-Querschnittsfläche, die die fünften Kernbrennstäbe umgibt, um Kühlmittel entlang der fünften Kernbrennstäbe fließen zu lassen, größer ist als die Kühlmittelflusswegs-Querschnittsfläche, die die vierten Kernbrennstäbe umgibt, um Kühlmittel entlang der vierten Kernbrennstäbe fließen zu lassen.

6. Kernbrennelementkassette (90) nach Anspruch 1, **dadurch gekennzeichnet, dass** die Unterteilung (33) Metall zur Absorption von Neutronen aufweist.

7. Kernbrennelementkassette (90) nach Anspruch 1, **dadurch gekennzeichnet, dass** der Abstand zwischen den ersten Kernbrennstäben und der inneren Oberfläche, welche gegenüber den ersten Kernbrennstäben angeordnet ist, größer ist als der Abstand zwischen den dritten Kernbrennstäben und der Unterteilung, gegenüber den dritten Kernbrennstäben.

8. Kernbrennelementkassette (90) nach Anspruch 1, **dadurch gekennzeichnet, dass** der Abstand zwischen den zweiten Kernbrennstäben und der inneren Oberfläche gegenüber den zweiten Kernbrennstäben größer ist als der Abstand zwischen den dritten Kernbrennstäben und der Unterteilung (33), die gegenüber den dritten Kernbrennstäben angeordnet ist.

9. Kernbrennelementkassette (90) nach Anspruch 7, **dadurch gekennzeichnet, dass** der Abstand zwischen den dritten Kernbrennstäben und der Unterteilung (33), gegenüber den dritten Kernbrennstäben nicht größer ist 1 mm.

10. Kernbrennelementkassette (90) nach Anspruch 9, **gekennzeichnet durch** eine Serie von Reihen von Kernbrennstäben, die auf einem quadratischen Gitter mit 10 Reihen und 10 Spalten in dem rechteckigen Wasserkasten (7) angeordnet sind, wobei der Abstand zwischen den ersten Kernbrennstäben und der inneren Oberfläche gegenüber den ersten Kernbrennstäben mehr als 1,24 mm beträgt.

11. Kernbrennelementkassette (90) nach Anspruch 9, **gekennzeichnet durch** eine Serie von Reihen von Kernbrennstäben, die auf einem quadratischen Gitter von 12 Spalten und 12 Zeilen in dem rechtwinkligen Wasserkasten (7) angeordnet sind, und wobei der Abstand zwischen den ersten Kernbrennstäben und der inneren Oberfläche gegenüber den ersten Kernbrennstäben mehr als 1,3 mm beträgt.

12. Kernbrennelementkassette (90) nach Anspruch 9, **gekennzeichnet durch** eine Serie von Reihen von Kernbrennstäben, die auf einem quadratischen Gitter mit 14 Reihen und 14 Spalten in dem rechtwinkligen Wasserkasten (7) angeordnet sind, und wobei der Abstand zwischen den ersten Kembrennstäben und der inneren Oberfläche gegenüber den ersten Kernbrennstäben mehr als 1,36 mm beträgt.

13. Kernbrennelementkassette (90) nach Anspruch 9, **gekennzeichnet durch** eine Reihe von Reihen von Kernbrennstäben, die auf einem quadratischen Gitter von 16 Zeilen und 16 Spalten in dem rechtwinkligen Wasserkasten (7) angeordnet sind, und wobei der Abstand zwischen den ersten Kernbrennstäben und der inneren Oberfläche gegenüber den ersten Kernbrennstäben mehr als 1,42 mm beträgt.

14. Kernbrennelementkassette (90) nach Anspruch 9, **gekennzeichnet durch** eine Serie von Reihen von Kernbrennstäben, die auf einem quadratischen Gitter von 18 Zeilen und 18 Spalten in dem rechtwinkligen Wasserkasten (7) angeordnet sind, und wobei der Abstand zwischen den ersten Kernbrennstäben und der inneren Oberfläche gegenüber den ersten Kernbrennstäben mehr als 1,48 mm beträgt.

## Revendications

1. Assemblage de combustible nucléaire (90), comprenant:

des crayons de combustible nucléaire (2), et un conteneur en forme de canal rectangulaire (7) pour le logement des crayons de combustible nucléaire (2) dans un espace intérieur dudit conteneur, dans lequel
une surface de section transversale d'une voie d'écoulement de réfrigérant qui entoure un premier crayon de combustible nucléaire le plus proche d'un coin du conteneur en forme de canal rectangulaire pour l'écoulement d'un réfrigérant le long du premier crayon de combustible, est supérieure à une surface de la section transversale d'une voie d'écoulement de réfrigérant qui entoure un deuxième crayon de combustible relativement plus distant du coin du conteneur en forme de canal rectangulaire par rapport au premier crayon de combustible et qui fait face à une surface intérieure du conteneur en forme de canal rectangulaire pour l'écoulement du réfrigérant le long du deuxième crayon de combustible, **caractérisé en ce que** le conteneur en forme de canal rectangulaire (7) comprend un élément de cloisonnement (33) qui divise l'espace intérieur en compartiments recevant chacun les crayons de combustible nucléaire (2), et **en ce que** la surface de la section transversale d'une voie d'écoulement de réfrigérant qui entoure le premier crayon de combustible nucléaire est supérieure à une surface de la section transversale d'une voie d'écoulement de réfrigérant qui entoure un troisième crayon de combustible qui fait face à l'élément de cloisonnement (33) et à la surface intérieure du conteneur en forme de canal rectangulaire (7) pour l'écoulement du réfrigérant le long du troisième crayon de combustible.

2. Assemblage de combustible nucléaire (90) selon la revendication 1, **caractérisé en ce que** le deuxième crayon de combustible est disposé entre le premier crayon de combustible et le troisième crayon de combustible de manière à empêcher le deuxième crayon de combustible de faire face à l'élément de cloisonnement, et **en ce que** la surface de la section transversale de la voie d'écoulement de réfrigérant qui entoure le deuxième crayon de combustible est supérieure à la surface de la section transversale de la voie d'écoulement de réfrigérant qui entoure le troisième crayon de combustible.

3. Assemblage de combustible nucléaire (90) selon la revendication 1, **caractérisé en ce que** le deuxième crayon de combustible est disposé entre le premier crayon de combustible et le troisième crayon de combustible de manière à empêcher le deuxième crayon de combustible de faire face à l'élément de cloisonnement, **en ce qu'**un quatrième crayon de combustible qui fait face à l'élément de cloisonnement (33) est disposé à une distance supérieure de la surface intérieure par rapport au troisième crayon de combustible de manière à empêcher le quatrième crayon de combustible de faire face à la surface intérieure, et **en ce que** la surface de la section transversale de la voie d'écoulement de réfrigérant qui entoure le deuxième crayon de combustible est supérieure à la surface de la section transversale de la voie d'écoulement de réfrigérant qui entoure le quatrième crayon de combustible pour l'écoulement du réfrigérant le long du quatrième crayon de combustible.

4. Assemblage de combustible nucléaire (90) selon la revendication 1, **caractérisé en ce que** le quatrième crayon de combustible qui fait face à l'élément de cloisonnement (33) est disposé à une distance supérieure de la surface intérieure par rapport au troisième crayon de combustible de manière à empêcher le quatrième crayon de combustible de faire face à la surface intérieure, et **en ce que** la surface de la section transversale de la voie d'écoulement de réfrigérant qui entoure le troisième crayon de combustible est supérieure à la surface de la section transversale de la voie d'écoulement de réfrigérant qui entoure le quatrième crayon de combustible pour l'écoulement du réfrigérant le long du quatrième crayon de combustible.

5. Assemblage de combustible nucléaire (90) selon la revendication 1, **caractérisé en ce que** le quatrième crayon de combustible qui fait face à l'élément de cloisonnement (33) est disposé à une distance supérieure de la surface intérieure par rapport au troisième crayon de combustible de manière à empêcher le quatrième crayon de combustible de faire face à la surface intérieure, **en ce qu'**un cinquième crayon de combustible est empêché de faire face à l'élément de cloisonnement et à la surface intérieure, et **en ce qu'**une surface de la section transversale de la voie d'écoulement de réfrigérant qui entoure un cinquième crayon de combustible pour l'écoulement du réfrigérant le long du cinquième crayon de combustible est supérieure à la surface de la section transversale de la voie d'écoulement qui entoure le quatrième crayon de combustible pour l'écoulement du réfrigérant le long du quatrième crayon de combustible.

6. Assemblage de combustible nucléaire (90) selon la revendication 1, **caractérisé en ce que** l'élément de cloisonnement (33) contient un matériau métallique pour l'absorption des neutrons.

7. Assemblage de combustible nucléaire (90) selon la revendication 1, **caractérisé en ce qu'**une distance entre le premier crayon de combustible et la surface intérieure qui fait face au premier crayon de combustible est supérieure à une distance entre le troisième crayon de combustible et l'élément de cloisonnement qui fait face au troisième crayon de combustible.

8. Assemblage de combustible nucléaire (90) selon la revendication 1, **caractérisé en ce qu'**une distance entre le deuxième crayon de combustible et la surface intérieure qui fait face au deuxième crayon de combustible est supérieure à une distance entre le troisième crayon de combustible et l'élément de cloisonnement (33) qui fait face au troisième crayon de combustible.

9. Assemblage de combustible nucléaire (90) selon la revendication 7, **caractérisé en ce que** la distance entre le troisième crayon de combustible et l'élément de cloisonnement (33) qui fait face au troisième crayon de combustible n'est pas inférieure à 1 mm.

10. Assemblage de combustible nucléaire (90) selon la revendication 9, **caractérisé en ce que** l'assemblage de combustible nucléaire contient une série de rangées de crayons de combustible disposés en treillis carré de 10 rangées sur 10 colonnes dans le conteneur en forme de canal rectangulaire (7), et **en ce que** la distance entre le premier crayon de combustible et la surface intérieure qui fait face au premier crayon de combustible est supérieure à 1.24 mm.

11. Assemblage de combustible nucléaire (90) selon la revendication 9, **caractérisé en ce que** l'assemblage de combustible nucléaire contient une série de rangées de crayons de combustible disposés en treillis carré de 12 rangées sur 12 colonnes dans le conteneur en forme de canal rectangulaire (7), et **en ce que** la distance entre le premier crayon de combustible et la surface intérieure qui fait face au premier crayon de combustible est supérieure à 1.3 mm.

**12.** Assemblage de combustible nucléaire (90) selon la revendication 9, **caractérisé en ce que** l'assemblage de combustible nucléaire contient une série de rangées de crayons de combustible disposées en treillis carré de 14 rangées sur 14 colonnes dans le conteneur en forme de canal rectangulaire (7), et **en ce que** la distance entre le premier crayon de combustible et la surface intérieure qui fait face au premier crayon de combustible est supérieure à 1.36 mm.

**13.** Assemblage de combustible nucléaire (90) selon la revendication 9, **caractérisé en ce que** l'assemblage de combustible nucléaire contient une série de rangées de crayons de combustible disposées en treillis carré de 16 rangées sur 16 colonnes dans le conteneur en forme de canal rectangulaire (7), et **en ce que** la distance entre le première crayon de combustible et la surface intérieure qui fait face au premier crayon de combustible est supérieure à 1.42 mm.

**14.** Assemblage de combustible nucléaire (90) selon la revendication 9, **caractérisé en ce que** l'assemblage de combustible nucléaire contient une série de rangées de crayons de combustible disposés en treillis carré de 18 rangées sur 18 colonnes dans le conteneur en forme de canal rectangulaire (7), et **en ce que** la distance entre le premier crayon de combustible et la surface intérieure qui fait face au premier crayon de combustible est supérieure à 1.48 mm.

# FIG. 1

# FIG. 2

# FIG. 3

FIG. 4

FIG. 5

## FIG. 6

# FIG. 7

# FIG. 8

# FIG. 9

## FIG. 10A

MODERATOR

COOLANT FLOW PATH
CROSS-SECTIONAL
AREA FOR FIRST ONE
OF FUEL RODS

## FIG. 10B

COOLANT FLOW PATH
CROSS-SECTIONAL
AREA FOR SECOND ONE
OF FUEL RODS

COOLANT FLOW PATH
CROSS-SECTIONAL
AREA FOR THIRD ONE
OF FUEL RODS

COOLANT FLOW PATH
CROSS-SECTIONAL
AREA FOR FOURTH ONE
OF FUEL RODS

## FIG. 10C

COOLANT FLOW PATH
CROSS-SECTIONAL
AREA FOR FIFTH ONE
OF FUEL RODS